(19) Europäisches Patentamt
European Patent Office
Office européen des brevets

(11) Publication number: 0 251 760 B1

(12) # EUROPEAN PATENT SPECIFICATION

(45) Date of publication of patent specification: **26.01.94**

(51) Int. Cl.5: **C08K 5/34**, B60C 1/00, C08L 21/00

(21) Application number: **87305773.1**

(22) Date of filing: **30.06.87**

(54) **Rubber composition.**

(30) Priority: **01.07.86 JP 152613/86**
**09.09.86 JP 210777/86**
**03.12.86 JP 286771/86**

(43) Date of publication of application:
**07.01.88 Bulletin 88/01**

(45) Publication of the grant of the patent:
**26.01.94 Bulletin 94/04**

(84) Designated Contracting States:
**DE FR GB**

(56) References cited:

| | |
|---|---|
| **WO-A-84/04530** | **DE-A- 1 117 000** |
| **DE-B- 1 009 534** | **FR-A- 1 228 524** |
| **FR-A- 1 564 308** | **GB-A- 946 728** |
| **GB-A- 1 079 990** | **US-A- 3 369 004** |

**Chemical Abstracts, vol. 96, no. 8, February 22, 1982, page 71, ref. no. 53585h Columbus, Ohio, US; & JP - A - 81 116 730**

**Chemical Abstracts, vol. 99, no. 22, November 28, 1983, page 73, ref. no. 177310w Columbus, Ohio, US; & SU-A-1 027 179**

(73) Proprietor: **Bridgestone Corporation**
**1-1, Kyobashi 1-Chome**
**Chuo-Ku**
**Tokyo 104(JP)**

(72) Inventor: **Hirata, Yasushi**
**3144-22, Irumagawa**
**Sayama City Saitama Pref.(JP)**
Inventor: **Hatakeyama, Kazuya**
**5-5, Ogawahigashi-Cho 3-Chome**
**Kodaira City Tokyo(JP)**
Inventor: **Kondo, Hitoshi**
**1-27-307, Sakae-Cho 3-Chome**
**Higashimurayama City Tokyo(JP)**

(74) Representative: **Whalley, Kevin et al**
**MARKS & CLERK**
**57/60 Lincoln's Inn Fields**
**London WC2A 3LS (GB)**

EP 0 251 760 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Chemical Abstracts, vol. 102, no. 20, May 20, 1985, page 76, ref. no. 168182j Columbus, Ohio, US; & JP-A-59 204 647

Polymer Bulletin, vol. 1, no. 8, June 1979, pages 563-568, Springer-Verlag, Berlin, DE; J. LUCKI et al.: "Stabilizing effect of 4-(1-imidazolyl)-phenol against the oxidation of polybutadiene by molecular and singlet oxygen"

## Description

The present invention relates to a tire wherein the rubber composition used as a tread rubber a has improved grip performance.

Recently, pneumatic tires having good driving performance have been increasingly demanded corresponding to the improvement of the performance of automobile and to the development of paved roads and high speed road networks. Particularly, grip performance is an important property demanded in pneumatic tires, and is generally estimated by the acceleration performance and brake performance. Accordingly, a car provided with a pneumatic tire having higher acceleration performance and brake performance can be driven more accurately and safely at high speed.

In the conventional method for producing a pneumatic tire having high grip performance, it is necessary to use a tread rubber composition having a large tan $\delta$, which is obtained by using a styrene-butadiene copolymer rubber having a high styrene content (that is, having a high glass transition temperature) or by using a styrene-butadiene copolymer rubber blended with large amounts of process oil and carbon black.

As a method for preventing the lowering of grip performance of a tire due to the temperature rising, Japanese Patent Laid-open Application No. 187,011/84 discloses the use of a copolymer rubber obtained by copolymerizing a monomer, such as 1,3-butadiene, styrene, isoprene or the like, with an acrylate or methacrylate compound containing diphenyl phosphate group, such as diphenyl-2-methacryloyloxyethyl phosphate, diphenyl-2-acryloyloxyethyl phosphate or the like.

However, when a styrene-butadiene copolymer rubber having a high styrene content is used in order to obtain a tire having high grip performance, the resulting tire has high grip performance, but the tan $\delta$ value of the rubber is lowered due to the temperature rising of the rubber caused by the running of the tire, and the grip performance of the tire is noticeably lowered. Also, although a tire having high grip performance can be obtained by using a styrene-butadiene copolymer rubber composition having high contents of process oil and carbon black, there are certain upper limit values of the contents of process oil and carbon black in the rubber composition, and a rubber composition containing extremely large amounts of process oil and carbon black has very poor breakage resistance and wear resistance. Further, the method described in the above described Japanese Patent Laid-open Application No. 187,011/84, which aims to prevent the lowering of grip performance of a tire due to the temperature rising of rubber constituting the tire, has the drawback that the method can not be applied to natural rubber and further damages excellent properties inherent to polymers, for example, styrene-butadiene copolymer rubber, polybutadiene rubber and the like, depending upon the production condition of the polymers.

The present inventors have made various investigations in order to solve the above described problems, and have found that, when a specifically limited amount of a specifically limited imidazole compound is compounded to a rubber component, a rubber composition having a large tan $\delta$ at high temperature range can be obtained, and the use of such rubber composition in the tread of tire can improve the grip performance of a tire during high speed running.

The inventors have further found that, when a specifically limited amount of benzimidazole or its specifically limited derivatives is compounded to a rubber component, the same effect as for the use of imidazole compound can be attained.

The inventors have further investigated and found that, when the specifically limited imidazole compound or benzimidazole compound is compounded to a rubber component together with a Brønsted acid, the resulting rubber composition has an improved scorch resistance and an improved workability, and hence the rubber composition has synergistically a very large tan $\delta$ at high temperature range.

The present invention in a first aspect provides a tire, wherein the tread of said tire is a rubber composition comprising 100 parts by weight of a rubber component consisting of natural rubber and/or synthetic rubber, and 0.1-50 parts by weight of at least one imidazole compound selected from 2-methylimidazole (2MZ), 2-undecylimidazole (C11Z), 2-heptadecylimidazole (C17Z), 2-phenylimidazole (2PZ), 2-ethyl-4-methyl- imidazole (2E4MZ), 2-phenyl-4-methylimidazole (2P4MZ), 1-benzyl-2-methylimidazole (1B2MZ), 1-cyanoethyl-2-methylimidazole (2MZ-CN), 1-cyanoethyl-2-undecylimidazole (C11Z-CN), 1-cyanoethyl-2-phenylimidazole (2PZ-CN), 2,4-diamino-6-{(2'-methylimidazolyl(1')}ethyl-S-triazine (2MZ-AZINE), 2,4-diamino-6-{2'-undecylimidazolyl(1')} ethyl-S-triazine (C11Z-AZINE), 2,4-diamino-6-{2'-ethyl-4'-methylimidazolyl(1')}ethyl-S-triazine (2E4MZ-AZINE), 1-(p-toluenesulfonyl)imidazole (PTZ), 2,4,5-tribromo-imidazole (TBZ), 4-methylimidazole (4MZ), N-trimethylsilylimidazole (TSZ), 2-mercapto-1-methylimidazole (1M2MrZ), p-(imidazole-1-yl)phenol (4ZP), N-acetylimidazole (1AZ), urocanic acid (U-acid), imidazole-4,5-dicarboxylic acid (ZD-acid), 1-(2,4,6-trimethyl-benzenesulfonyl)imidazole, 2-methyl-5-nitro-1-imidazole-ethanol (2M5N1EZ), 2-phenyl-4,5-dioxymethylimidazole (2PHZ), 2-phenyl-4-methyl-5-oxymethylimidazole (2P4MHZ),

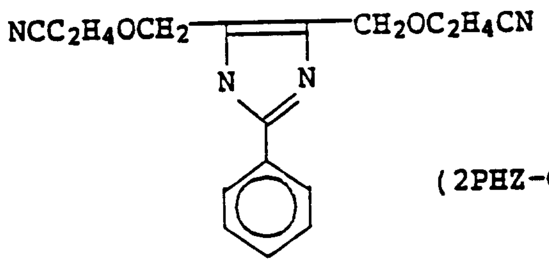

(2PHZ-CN),

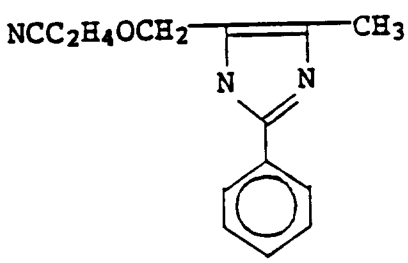

(2P4MZ-CN),

The present invention in a second aspect provides a tire, wherein the tread of said tire is a rubber composition comprising 100 parts by weight of a rubber component consisting of natural rubber and/or synthetic rubber, and 0.1-50 parts by weight of at least one member selected from benzimidazole and benzimidazole derivatives selected from 2-anilinobenzimidazole (ABI), 2-hydroxybenzimidazole (HBI), 2-methylbenzimidazole (MBI), 2-phenyl-5-methylbenzimidazole (PMBI), 2-phenyl-5,6-dimethylbenzimidazole (PDMBI), 2-p-chlorophenylbenzimidazole (CPBI), nocodazole (NZ), 2-(2-pyridino)benzimidazole (PDBI), 2-(4-fluorophenyl)-1-methylbenzimidazole (FPMBI), 2-guanidinobenzimidazole (GBI), 2-chloromethylbenzimidazole (CBI), 5-chloro-2-(trichloromethyl)benzimidazole (CTCMBI), 5,6-dimethylbenzimidazole (DMBI), and 2-acetonitrilebenzimidazole (ANBI).

In the present invention, natural rubber or synthetic rubber alone or a blend thereof can be used as a rubber component. As the synthetic rubber, there can be used synthetic polyisoprene rubber, polybutadiene rubber, styrene-butadiene rubber and the like.

The imidazole compounds to be used in the first aspect of the present invention are as follows.

The imidazole compound is selected from 2-methylimidazole (2MZ), 2-undecylimidazole (C11Z), 2-heptadecylimidazole (C17Z), 2-phenylimidazole (2PZ), 2-ethyl-4-methylimidazole (2E4MZ), 2-phenyl-4-methylimidazole (2P4MZ), 1-benzyl-2-methylimidazole (1B2MZ), 1-cyanoethyl-2-methylimidazole (2MZ-CN), 1-cyanoethyl-2-undecylimidazole (C11Z-CN), 1-cyanoethyl-2-phenylimidazole (2PZ-CN), 2,4-diamino-6-{2'-methylimidazolyl(1')}ethyl-S-triazine (2MZ-AZINE), 2,4-diamino-6-{2'-undecylimidazolyl(1')}ethyl-S-triazine (C11Z-AZINE), 2,4-diamino-6-{2'-ethyl-4'-methylimidazolyl(1')}ethyl-S-triazine (2E4MZ-AZINE), 1-(p-toluenesulfonyl)imidazole (PTZ), 2,4,5-tribromoimidazole (TBZ), 4-methylimidazole (4MZ), N-trimethylsilylimidazole (TSZ), 2-mercapto-1-methylimidazole (1M2MrZ), p-(imidazole-1-yl)phenol (4ZP), N-acetylimidazole (1AZ), urocanic acid (U-acid), imidazole-4,5-dicarboxylic acid (ZD-acid), 1-(2,4,6-trimethylbenzenesulfonyl)imidazole, 2-methyl-5-nitro-1-imidazole-ethanol (2M5N1EZ), 2-phenyl-4,5-dioxymethylimidazole (2PHZ), 2-phenyl-4-methyl-5-oxymethylimidazole (2P4MHZ),

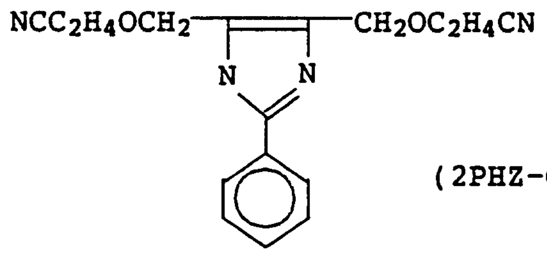

(2PHZ-CN),

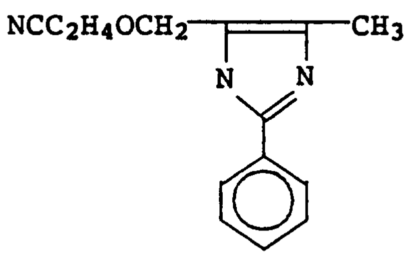

(2P4MZ-CN).

These imidazole compounds can be used alone or in admixture of at least two members.

In the specification, the "imidazole compound" may be merely referred to as "imidazole" hereinafter.

In the first aspect of the present invention, the amount of the imidazole to be used is limited to 0.1-50 parts by weight based on 100 parts by weight of rubber component. The reason is as follows. When the amount is less than 0.1 part by weight, the effect of the use of the imidazole does not satisfactorily appear. While, when the amount exceeds 50 parts by weight, the effect of the compound does not so increase as is expected corresponding to the addition amount, and further the compound affects adversely to the properties of the vulcanizate of the resulting rubber composition.

In the second aspect of the present invention, benzimidazole or certain selected derivatives thereof are used.

As these benzimidazole derivatives, there can be used 2-anilinobenzimidazole (ABI), 2-hydroxybenzimidazole (HBI), 2-methylbenzimidazole (MBI), 2-phenyl-5-methylbenzimidazole (PMBI), 2-phenyl-5,6-dimethylbenzimidazole (PDMBI), 2-p-chlorophenylbenzimidazole (CPBI), nocodazole (NZ), 2-(2-pyridino)-benzimidazole (PDBI), 2-(4-fluorophenyl)-1-methylbenzimidazole (FPMBI), 2-guanidinobenzimidazole (GBI), 2-chloromethylbenzimidazole (CBI), 5-chloro-2-trichloromethyl)benzimidazole (CTCMBI), 5,6-dimethylbenzimidazole (DMBI), and 2-acetonitrilebenzimidazole (ANBI). In the use of the above described benzimidazole derivatives in the following examples, when the benzimidazole derivatives were commercially available as a reagent, ones sold by Aldrich Chemical Co. were used, and when the benzimidazole derivatives were not commercially available, the benzimidazole derivatives were synthesized in the Synthesis examples explained later.

In the specification, not only "benzimidazole itself", but also "benzimidazole derivative" may be referred to as "benzimidazole" hereinafter.

In the second aspect of the present invention, the amount of the benzimidazole or its derivative to be used is limited to 0.1-50 parts by weight based on 100 parts by weight of rubber component. The reason is as follows. When the amount is less than 0.1 part, the effect of the use of benzimidazole or its derivative does not satisfactorily appear, while when the amount exceeds 50 parts by weight, the effect of the use of benzimidazole or its derivative does not so increase as is expected corresponding to the addition amount, and further the benzimidazole or its derivative affects adversely the properties of the vulcanizate of the resulting rubber composition.

The Brønsted acid to be preferably used in the present invention in combination with the imidazole or benzimidazole includes phenol derivatives, carboxylic acid, sulfonic acid, sulfuric acid and its derivatives, phosphoric acid and its derivative, cyanuric acid and its derivatives, sulfinic acid, nitric acid and its derivatives, phosphorous acid and its derivatives, dithiophosphoric acid derivatives, and carbonic acid and its derivatives. These compounds are preferably 2,6-di-tert-butyl-p-cresol, 2,2'-methylenebis-4-methyl-6-tert-butylphenol, 2,5-di-tert-butylhydroquinone, 4,4'-thiobis-3-methyl-6-tert-butylphenol, styrenated p-cresol, 4,4'-butylidenebis-3-methyl-6-tert-butylphenol, acetic acid, succinic acid, stearic acid, oleic acid, rhodinic acid,

maleic acid, benzoic acid, p-methoxybenzoic acid, p-chlorobenzoic acid, p-nitrobenzoic acid, cinnamic acid, α-naphthylcarboxylic acid, phthalic acid, trimellitic acid, pyromellitic acid, phthalic anhydride, benzenesulfonic acid, benzenesulfonic acids having an alkyl substituent having 1-12 carbon atoms, α-naphthalenesulfonic acid, sulfuric acid, sulfuric acid monomethyl ester, phosphoric acid, phosphoric acid mono(2-ethylhexyl) ester, phosphoric acid di(2-ethylhexyl) ester, cyanuric acid, cyanuric acid diamide, benzenesulfinic acid, p-toluenesulfinic acid, phosphorous acid, phosphorous acid dimethyl ester, phosphorous acid diphenyl ester, O,O'-dimethyl-dithiophosphoric acid, O,O'-bis(2-ethylhexyl)-dithiophosphoric acid, carbonic acid, and ammonium hydrogencarbonate.

These Brønsted acids can be used alone or in admixture of at least two members. When a Brønsted acid is compounded to a rubber component, the Brønsted acid may be previously mixed with an imidazole or benzimidazole, and then the resulting mixture may be compounded to a rubber component, or the Brønsted acid and the imidazole or benzimidazole may be separately compounded to a rubber component.

The amount of the Brønsted acid to be used is limited to 0.1-50 parts by weight based on 100 parts by weight of rubber component. The reason is as follows. When the amount of Brønsted acid is less than 0.1 part by weight, the Brønsted acid can not give a satisfactorily high scorch resistance to the resulting rubber composition. While, when the amount exceeds 50 parts by weight, the effect of the use of the Brønsted acid does not so increase as is expected corresponding to the addition amount, and further the Brønsted acid affects adversely the properties of the vulcanizate of the resulting rubber composition.

The rubber composition of the present invention may occasionally contain, in addition to the above described imidazole, benzimidazole and Brønsted acid, commonly used amounts of additives, which are ordinarily used in the rubber industry, such as reinforcing agent, softener, antioxidant, vulcanization accelerator, vulcanization supplement accelerator, vulcanizer and the like.

The imidazole and benzimidazole to be used in the present invention are effective for increasing the mutual action between rubber molecule and rubber molecule, between rubber molecule and reinforcing agent particle (particularly, carbon black particle), and between reinforcing agent particle and reinforcing agent particle, and hence a rubber composition having a large tan $\delta$ value even at high temperature can be obtained.

When the imidazole or benzimidazole is used in combination with a Brønsted acid, the drawback of poor scorch resistance inherent to a rubber composition containing imidazole or benzimidazole alone can be eliminated, and the resulting rubber composition has an improved scorch resistance and has a very large tan $\delta$ value at high temperature by the synergistic action of the imidazole or benzimidazole and the Brønsted acid.

The present invention will be explained hereinafter referring to the following Examples, Comparative examples and Synthetic examples.

## Examples 1-27 and Comparative Example 1

A rubber composition consisting of 100 parts by weight of a styrene-butadiene rubber, 37.5 parts by weight by aroma oil, 65 parts by weight of ISAF carbon black and 3 parts by weight of zinc oxide was compounded with 0.01 mol of various imidazoles shown in the following Table 1 together with variant amounts of 1,3-diphenylguanidine, 2-mercaptobenzothiazole and sulfur, and the resulting mixtures were vulcanized such that the resulting vulcanizates would have substantially the same modulus. Each of the resulting vulcanizates was measured with respect to its tan $\delta$ at 80°C under a 1% dynamic strain by means of a viscoelastometer made by Rheometrix Co. The obtained results are shown in Table 1.

The value of tan $\delta$ of the vulcanizate of a rubber composition not containing an imidazole compound was measured in the same manner as described above, and the obtained result is also shown in Table 1 as Comparative Example 1.

It can be seen from the results shown in Table 1 that all the rubber compositions obtained in Examples 1-27 are higher in the value of tan $\delta$ at high temperature range than the rubber composition obtained in Comparative Example 1.

Table 1(a)

| | Comparative Example 1 | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Imidazole used (abbreviation) | - | 2MZ | C11Z | C17Z | 2PZ | 2E4MZ | 2P4MZ | 1B2MZ | 2MZ-CN | C11Z-CN | 2PZ-CN |
| Tan δ at 80°C | 0.173 | 0.191 | 0.207 | 0.198 | 0.225 | 0.216 | 0.238 | 0.195 | 0.213 | 0.207 | 0.227 |

Table 1(b)

| | Example 11 | Example 12 | Example 13 | Example 14 | Example 15 | Example 16 | Example 17 | Example 18 | Example 19 | Example 20 | Example 21 |
|---|---|---|---|---|---|---|---|---|---|---|---|
| Imidazole used (abbreviation) | 2MZ-AZINE | C11Z-AZINE | 2E4MZ-AZINE | PTZ | TBZ | 4MZ | TSZ | 1M2MrZ | 4ZP | 1AZ | U-Acid |
| Tan δ at 80°C | 0.203 | 0.209 | 0.214 | 0.208 | 0.210 | 0.215 | 0.210 | 0.217 | 0.212 | 0.223 | 0.218 |

Table 1(c)

| | Example 22 | Example 23 | Example 24 | Example 25 | Example 26 | Example 27 |
|---|---|---|---|---|---|---|
| Imidazole used (abbreviation) | 2D-Acid | 2M5N1EZ | 2P4MHZ | 2PHZ | 2P4MHZ-CN | 2PHZ-CN |
| Tan δ at 80°C | 0.220 | 0.210 | 0.227 | 0.238 | 0.231 | 0.225 |

(Note) (1) Imidazoles used in Examples 1-27 are commercially available imidazoles sold by Shikoku Fine Chemicals Co., Ltd.

Examples 28-33 and Comparative Example 2

A rubber composition consisting of 100 parts by weight of a styrene-butadiene rubber having a styrene content of 35%, 80 parts by weight of ISAF carbon black, 100 parts by weight of aroma oil, 1 part by weight of stearic acid, 1 part by weight of an antioxidant (IPPD), 3 parts by weight of zinc oxide, 0.3 part by weight of an accelerator of DPG, 0.7 part by weight of an accelerator of DM, and 1.5 parts by weight of sulfur was compounded with 5 parts by weight of each of 2P4MZ, 2PZ-CN, 4ZP, 2PHZ-CN and U-Acid, or compounded with a mixture of 3 parts by weight of 2P4MZ and 3 parts by weight of SFZ to prepare rubber compositions. A tire having a size of 205/515-13 (for front wheel) or 225/515-13 (for rear wheel) was produced by using each of the above obtained rubber compositions in its tread rubber.

The tire was driven at a speed as high as possible on a circuit having a one-round length of 4.41 km, and lap times in every lap from 10th to 20th laps were measured, and the best lap time among 10th to 20th laps was determined. For comparison, a tire of Comparative Example 2 was produced in the same manner as described in the above Examples 28-33 by using a rubber composition containing no imidazole defined in the present invention, and the best lap time among 10th to 20th laps was determined in the same manner as described above. The best lap time of the tire of Comparative Example 2 was calculated as an index 100, and the best lap time of the tire of Examples 28-33 was indicated by an index, which is a reciprocal of the ratio of the best lap time of the tire of Examples 28-33 to that of the tire of Comparative Example 2.

The obtained results are shown in the following Table 2.

In Table 2, a larger index illustrates that the lap time is shorter, and the grip performance at high speed running of the tire is improved.

It can be seen from the results shown in Table 2 that all the rubber compositions containing the imidazole according to the present invention give higher grip performance than the rubber composition containing no imidazole.

Table 2

| | Comparative Example 2 | Example 28 | Example 29 | Example 30 | Example 31 | Example 32 | Example 33 |
|---|---|---|---|---|---|---|---|
| Imidazole used (abbreviation) | | 2P4MZ | 2PZ-CN | 4ZP | 2PHZ-CN | U-Acid | mixture of 2P4MZ and SFZ |
| Best lap time among 10th to 20th laps | 100 | 106 | 105 | 103 | 105 | 105 | 107 |

Synthetic example 1

2-Anilinobenzimidaze (ABI)

Into a four-necked flask of 1 ℓ capacity were charged 228 g (1.0 mol) of sym-diphenylthiourea and 200 mℓ of acetone, and then 126.0 g (1.0 mol) of dimethyl sulfate was dropwise added to the acetone solution in 1 hour while keeping the resulting mixture at 15 °C, and further a reaction of the diphenylthiourea with the dimethyl sulfate was effected at 60 °C for 4 hours. Then, the reaction mass was poured into ice water. After the reaction mass was dissolved, the resulting solution was filtered, the filtrate was neutralized with an aqueous solution of soda ash, and then the resulting precipitate was filtered, and the filter cake was washed with water to obtain S-methyl-N,N-diphenylisothiourea having a melting point of 103.5-106 °C in an yield of 235.5 g (97.3%).

Then, 101.2 g (0.973 mol) of o-phenylenediamine and 235.5 g (0.973 mol) of S-methyl-N,N-diphenylisothiourea were changed into a four-necked flask of 1 ℓ capacity, and reacted at 140 °C for 10 hours. The reaction product was cooled and filtered, and the filter cake was washed with xylene to obtain the aimed 2-anilinobenzimidazole having a melting point of 193.2-194.5 °C in an yield of 149.2 g (73.2%).

Synthetic example 2

2-Hydroxybenzimidazole (HBI)

Into a four-necked flask of 1 ℓ capacity were charged 64.8 g (0.6 mol) of o-phenylenediamine, 31.3 g (0.5 mol) of hydrochloric acid, 36.0 g (0.6 mol) of urea and 50 mℓ of xylene, and a reaction was effected at 140-150 °C for 5 hours while distilling out 20 mℓ of water. Then, the reaction product was charged into a four-necked flask of 1 ℓ capacity, into which 30 g (0.75 mol) of sodium hydroxide and 600 mℓ of water had been previously charged, and the resulting mixture was stirred at 80 °C for 15 hours. Then, thus treated mixture was filtered while it was hot, and the filtrate was cooled to form a precipitate. The resulting precipitate was filtered, and the filter cake was washed with water to obtain the aimed 2-hydroxybenzimidazole having a melting point of 316-317 °C in an yield of 53.6 g (66.6%).

Synthetic example 3 (Not of the invention)

2-Heptadecylbenzimidazole (HDBI)

Into a four-necked flask of 2 ℓ capacity were charged 54.0 g (0.5 mol) of o-phenylenediamine, 142 g (0.5 mol) of stearic acid and 500 mℓ of 4N-hydrochloric acid, and a reaction was effected for 5 hours while refluxing the reaction solution. Then, 500 mℓ of water was added to the reaction mass, and the resulting solution was neutralized up to a pH of 9.2 at a temperature of not higher than 15 °C with a 20% aqueous solution of sodium hydroxide. Then, the resulting mixture was stirred at a temperature of not higher than 15 °C for 1 hour, and then filtered. The filter cake was washed with water to obtain the aimed 2-heptadecylbenzimidazole in an yield of 139.5 g (78.4%).

Synthetic example 4 (Not of the invention)

2-p-n-Butylphenylbenzimidazole (BPBI)

Into a four-necked flask of 1 ℓ capacity were charged 40.5 g (0.25 mol) of p-n-butylbenzaldehyde, 27.0 g (0.25 mol) of o-phenylenediamine, 28.6 g (0.23 mol) of sodium sulfite and 350 mℓ of dimethylformaldehyde, and a reaction was effected for 1 hour while refluxing the reaction solution. Then, 250 mℓ of water was added to the reaction mass, and the resulting mixture was cooled and filtered. The filter cake was washed with water to obtain the aimed 2-p-n-butylphenylbenzimidazole in an yield of 52.2 g (82.9%).

Synthetic example 5 (Not of the invention)

2-p-Octyloxyphenylbenzimidazole (OOPBI)

The operation of Synthetic example 4 was repeated, except that 58.5 g (0.25 mol) of p-octyloxybenzaldehyde was used in place of p-n-butylbenzaldehyde, to obtain the aimed 2-p-octyloxyphenylbenzimidazole in an yield of 56.8 g (70.1%).

Synthetic example 6

2-Phenyl-5-methylbenzimidazole (PMBI)

The operation of Synthetic example 4 was repeated, except that 30.5 g (0.25 mol) of 3,4-diaminotoluene was used in place of o-phenylenediamine, to obtain the aimed 2-phenyl-5-methylbenzimidazole in an yield of 43.1 g (82.1%).

Synthetic example 7

2-Phenyl-5,6-dimethylbenzimidazole (PDMBI)

The operation of Synthetic example 4 was repeated, except that 34.0 g (0.25 mol) of 4,5-diamino-o-xylene was used in place of o-phenylenediamine, to obtain the aimed 2-phenyl-5,6-dimethylbenzimidazole in an yield of 42.2 g (75.4%).

Synthetic example 8

2-Chlorophenylbenzimidazole (CPBI)

The operation of Synthetic example 4 was repeated, except that 35.2 g (0.25 mol) of p-chlorobenzaldehyde was used in place of p-n-butylbenzaldehyde, to obtain the aimed 2-p-chlorophenylbenzimidazole in an yield of 47.3 g (82.1%).

Examples 34-48 and Comparative example 3

A rubber composition consisting of 100 parts by weight of a styrene-butadiene rubber, 37.5 parts by weight of aroma oil, 65 parts by weight of ISAF carbon black and 3 parts by weight of zinc oxide was compounded with 3 parts by weight of benzimidazole or its derivative described in the following Table 3 together with variant amounts of 1,3-diphenylguanidine, 2-mercaptobenzothiazole and sulfur, and the resulting mixtures were vulcanized such that the resulting vulcanizates would have substantially the same modulus. Each of the resulting vulcanizates was measured with respect to its tan $\delta$ at 80°C under a 1% dynamic strain by means of a viscoelastomer made by Rheometrix Co. The obtained results are shown in Table 3.

A vulcanizate of a rubber composition containing neither benzimidazole nor its derivative was evaluated in the same manner as described above, and the obtained result is also shown in Table 3 as Comparative example 3.

Table 3(a)

| | Comparalive example 3 | Example 34 | Example 35 |
|---|---|---|---|
| Benzimidazole used | - | ABI | HBI |
| Tan δ at 80 ° C | 0.173 | 0.220 | 0.221 |

Table 3(b)

| | Example 36 | Example 37 | Example 38 | Example 39 | Example 40 |
|---|---|---|---|---|---|
| Benzimidazole used | PMBI | PDMBI | CPBI | MBI | NZ |
| Tan δ at 80 ° C | 0.219 | 0.221 | 0.221 | 0.224 | 0.222 |

Table 3(c)

| | Example 41 | Example 42 | Example 43 | Example 44 | Example 45 |
|---|---|---|---|---|---|
| Benzimidazole used | GBI | PDBI | CBI | ANBI | CTCMBI |
| Tan δ at 80 ° C | 0.218 | 0.226 | 0.225 | 0.226 | 0.227 |

Table 3(d)

| | Example 46 | Example 47 | Example 48 |
|---|---|---|---|
| Benz-imidazole used | benzimidazole | FPMBI | DMBI |
| Tan δ at 80 ° C | 0.226 | 0.219 | 0.216 |

It can be seen from the results shown in Table 3 that all the rubber compositions obtained in Examples 34-48 have higher values of tan δ at high temperature range than the rubber composition obtained in Comparative example 3.

Examples 49-51 and Comparative example 4

A rubber composition consisting of 100 parts by weight of a styrene-butadiene rubber having a styrene content of 35%, 80 parts by weight of ISAF carbon black, 100 parts by weight of aroma oil, 1 part by weight of stearic acid, 1 part by weight of an antioxidant (IPPD), 3 parts by weight of zinc oxide, 0.3 part by weight of an accelerator of DPG, 0.7 part by weight of an accelerator of DM and 1.5 parts by weight of sulfur was compounded with 5 parts by weight of a benzimidazole derivative shown in the following Table 4 to prepare a rubber composition. A tire having a size of 205/515-13 (for front wheel) or 225/515-13 (for rear wheel) was produced by using the above obtained rubber composition in its tread rubber.

The tire was driven at a speed as high as possible on a circuit having a one-round length of 4.41 km, and lap times in every lap from 10th to 20th laps were measured, and the best lap time among 10th to 20th laps was determined. For comparison, a tire of Comparative example 4 was produced in the same manner as described in the above Examples 49-51 by using a rubber composition containing neither benzimidazole nor its derivative defined in the present invention, and the best lap time among 10th to 20th laps was determined in the same manner as described above. The best lap time of the tire of Comparative example 4 was calculated as an index 100, and the best lap time of the tire of Examples 49-51 was indicated by an index, which is a reciprocal of the ratio of the best lap time of the tire of Examples 49-51 to that of the tire of Comparative example 4.

The obtained results are shown in Table 4.

In Table 4, a larger index illustrates that the lap time is shorter, and the grip performance at high speed running of the tire is improved.

Table 4

| | Comparative example 4 | Example 49 | Example 50 | Example 51 |
|---|---|---|---|---|
| Benzimidazole used | - | HBI | MBI | PDBI |
| Best lap time among 10th to 20th laps | 100 | 104 | 105 | 106 |

It can be seen from the results of Table 4 that all the rubber compositions of the present invention have improved in grip performance compared with the rubber composition of Comparative example 4.

Examples 52-73 and Comparative examples 5-7

To 100 parts by weight of a styrene-butadiene rubber were added 37.5 parts by weight of aroma oil, 65 parts by weight of ISAF carbon black, 3 parts by weight of zinc oxide, 0.5 part by weight of 1,3-diphenylguanidine, 1.5 parts by weight of dibenzothiazyl disulfide, and 1.5 parts by weight of sulfur, and further added 0.01 mol of 1-stearyl-2-undecylimidazole (C18C11Z) or 1-benzyl-2-methylimidazole (1B2MZ) and 0.01 mol of a Brønsted acid shown in the following Table 5, and the resulting mixture was kneaded to obtain an unvulcanized rubber composition. The resulting rubber composition was measured with respect to its Mooney scorch time $t_5$ at 130 °C according to JIS K6300. The obtained results are shown in Table 5.

In Table 5, Example 73 illustrates a rubber composition produced by previously mixing imidazole with a Brønsted acid.

Mooney viscosity was also measured with respect to rubber compositions prepared without the addition of Brønsted acid as illustrated in Comparative examples 5 and 6, and the obtained results are also shown in Table 5.

Table 5(a)

| | Comparative example 5 | Example 52 | Example 53 | Example 54 | Example 55 | Example 56 | Example 57 | Example 58 | Example 59 | Example 60 | Example 61 | Example 62 |
|---|---|---|---|---|---|---|---|---|---|---|---|---|
| Brønsted acid used | - | α-naphthyl-carboxylic acid | phthalic acid | trimellitic acid | pyro-mellitic acid | cinnamic acid | benzoic acid | p-chloro-benzoic acid | p-nitro-benzoic acid | p-methoxy-benzoic acid | rhodinic acid | succinic acid |
| Mooney scorch time, $t_5$ (min) | 6.6 | 8.9 | 7.8 | 18.4 | 10.8 | 8.4 | 12.4 | 10.8 | 11.1 | 8.6 | 9.4 | 7.5 |

Table 5(b)

| | Example 63 | Example 64 | Example 65 | Example 66 | Example 67 | Example 68 | Example 69 | Example 70 | Example 71 | Comparative example 6 | Example 72 | Example 73 |
|---|---|---|---|---|---|---|---|---|---|---|---|---|
| Brønsted acid used | maleic acid | 4,4'-thiobis(3-methyl-6-tert-butylphenol) | 4,4'-butylidene-bis(3-methyl-6-tert-butylphenol) | acetic acid | p-toluene-sulfonic acid | sulfuric acid | phosphoric acid | phosphorous acid | phosphoric acid di(2-ethylhexyl) ester | - | p-toluene-sulfonic acid | p-toluene-sulfonic acid |
| Mooney scorch time, $t_5$ (min) | 9.2 | 7.5 | 8.4 | 7.5 | 15.1 | 12.4 | 7.5 | 9.2 | 8.3 | 6.5 | 14.1 | 16.7 |

Note:

1) Imidazole used in Comparative example 5 and Examples 52-71 is C18C11Z.

2) Imidazole used in Comparative example 6 and Examples 72 and 73 is 1B2MZ; and in Example 73, equimolar amounts of 1B2MZ and p-toluenesulfonic acid were dissolved in methanol, and the methanol solution was refluxed for 3 hours to be condensed, and the condensed solution was used.

It can be seen from Table 5 that, when a Brønsted acid is used in combination with an imidazole, the resulting rubber composition does not have one drawback of poor scorch resistance inherent to a rubber composition containing imidazole alone, and has an improved scorch time.

Then, the unvulcanized rubber compositions of Examples 52, 54, 56, 58, 60, 61, 64 and 65 were vulcanized, and the resulting vulcanizates were measured with respect to their tan δ at 80 °C under a 1% dynamic strain by means of a viscoelastometer made by Rheometrix Co. The unvulcanized rubber

composition of Comparative example 5 was vulcanized in the same manner as described above, and the value of tan δ at 80°C of the vulcanizate was measured in the same manner as described above. The following Table 6 shows the difference in the value of tan δ at 80°C between the vulcanizates of rubber compositions of Examples 52, 54, 56, 58, 60, 61, 64 and 65 and the vulcanizate of a rubber composition of Comparative example 5. For comparison, the difference in the value of tan δ at 80°C between the vulcanizate of a rubber composition of Comparative example 5 and the vulcanizate of a rubber composition of Comparative example 7, which contains neither imidazole nor Brønsted acid, is also shown in Table 6.

Table 6

| | Example 52 | Example 54 | Example 56 | Example 58 | Example 60 | Example 61 | Example 64 | Example 65 | Comparative example 7 |
|---|---|---|---|---|---|---|---|---|---|
| Difference of the value of tan δ at 80°C | +0.029 | +0.062 | +0.031 | +0.045 | +0.043 | +0.032 | +0.036 | +0.041 | -0.022 |

Note: Comparative example 7 illustrates a rubber composition containing neither imidazole nor Brønsted acid.

It can be seen from Table 6 that the use of imidazole together with Brønsted acid improves synergistically the value of tan δ at high temperature of vulcanized rubber composition.

Examples 74 and 75 and Comparative examples 8 and 9

To 100 parts by weight of a styrene-butadiene rubber were added 37.5 parts by weight of aroma oil, 65 parts by weight of ISAF carbon black, 3 parts by weight of zinc oxide, 0.5 part by weight of 1,3-diphenylguanidine, 1.5 parts by weight of dibenzothiazyl disulfide and 1.5 parts by weight of sulfur, and further added 0.01 mol of 2-anilinobenzimidazole (ABI) or 2-methylbenzimidazole (MBI) and 0.01 mol of each Brønsted acid shown in the following Table 7, and the resulting mixture was kneaded to obtain an unvulcanized rubber composition. The resulting rubber composition was measured with respect to its Mooney scorch time $t_5$ at 130 °C according to JIS K6300. The obtained results are shown in Table 7. For comparison, the same experiments as described above were carried out, except that the Brønsted acid was not used. The obtained results are also shown in Table 7 as Comparative examples 8 and 9.

Table 7

| | Comparative example | | Example | |
|---|---|---|---|---|
| | 8 | 9 | 74 | 75 |
| Benzimidazole used | ABI | MBI | ABI | MBI |
| Brønsted acid used | - | - | trimellitic acid | p-methoxybenzoic acid |
| Mooney scorch time, $t_5$ (min) | 6.0 | 6.1 | 16.1 | 8.2 |

It can be seen from Table 7 that the use of Brønsted acid in combination with benzimidazole can obviate the drawback of poor scorch resistance inherent to a rubber composition containing benzimidazole alone.

As described above, the rubber composition of the first and second aspects of the present invention, which is obtained by compounding a specifically limited amount of a specifically limited imidazole or benzimidazole to a rubber component, has a large tan $\delta$ at high temperature range. Therefore, when such rubber composition is used in the tread of a tire, lowering of the value of tan $\delta$ of the tread due to the temperature rising caused by the running of the tire can be prevented, and the tire has an improved grip performance in the high speed running.

Further, a rubber composition of the present invention, which is obtained by compounding a specifically limited amount of a specifically limited Brønsted acid to a rubber component together with the specifically limited imidazole or benzimidazole, does not have the drawback of poor scorch resistance inherent to a rubber composition containing imidazole or benzimidazole alone, and has an improved scorch resistance and further has a very large tan $\delta$ at high temperature range due to the synergistic effect of the imidazole or benzimidazole and the Brønsted acid. When such a rubber composition is used in the tread of a tire, lowering of the value of tan $\delta$ of the tread due to the temperature rising caused by the running of the tire can be prevented, and the tire has a remarkably improved grip performance during high speed running.

## Claims

1. A tire, wherein the tread of said tire is a rubber composition comprising 100 parts by weight of a rubber component consisting of natural rubber and/or synthetic rubber, and 0.1-50 parts by weight of at least one imidazole compound selected from 2-methylimidazole (2MZ), 2-undecylimidazole (C11Z), 2-heptadecylimidazole (C17Z), 2-phenylimidazole (2PZ), 2-ethyl-4-methylimidazole (2E4MZ), 2-phenyl-4-methylimidazole (2P4MZ), 1-benzyl-2-methylimidazole (1B2MZ), 1-cyanoethyl-2-methylimidazole (2MZ-CN), 1-cyanoethyl-2-undecylimidazole (C11Z-CN), 1-cyanoethyl-2-phenylimidazole (2PZ-CN), 2,4-diamino-6-{(2'-methylimidazolyl(1')}ethyl-S-triazine (2MZ-AZINE), 2,4-diamino-6-{2'-undecylimidazolyl(1')} ethyl-S-triazine (C11Z-AZINE), 2,4-diamino-6-{2'-ethyl-4'-methylimidazolyl(1')}ethyl-S-triazine (2E4MZ-AZINE), 1-(p-toluenesulfonyl)imidazole (PTZ), 2,4,5-tribromo-imidazole (TBZ), 4-methylimidazole (4MZ), N-trimethylsilylimidazole (TSZ), 2-mercapto-1-methylimidazole (1M2MrZ), p-(imidazole-1-yl)phenol (4ZP), N-acetylimidazole (1AZ), urocanic acid (U-acid), imidazole-4,5-dicarboxylic acid (ZD-acid), 1-(2,4,6-trimethyl-benzenesulfonyl)imidazole, 2-methyl-5-nitro-1-imidazole-ethanol (2M5N1EZ), 2-phenyl-4,5-dioxymethylimidazole (2PHZ), 2-phenyl-4-methyl-5-oxymethylimidazole (2P4MHZ),

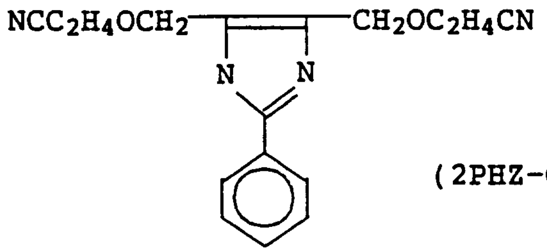

(2PHZ-CN),

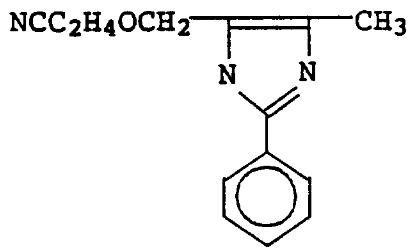

(2P4MZ-CN).

2. A tire, wherein the tread of said tire is a rubber composition comprising 100 parts by weight of a rubber component consisting of natural rubber and/or synthetic rubber, and 0.1-50 parts by weight of at least one member selected from benzimidazole and benzimidazole derivatives selected from 2-anilinobenzimidazole (ABI), 2-hydroxybenzimidazole (HBI), 2-methylbenzimidazole (MBI), 2-phenyl-5-methylbenzimidazole (PMBI), 2-phenyl-5,6-dimethylbenzimidazole (PDMBI), 2-p-chlorophenylbenzimidazole (CPBI), nocodazole (NZ), 2-(2-pyridino)benzimidazole (PDBI), 2-(4-fluorophenyl)-1-methylbenzimidazole (FPMBI), 2-guanidinobenzimidazole (GBI), 2-chloromethylbenzimidazole (CBI), 5-chloro-2-(trichloromethyl)benzimidazole (CTCMBI), 5,6-dimethylbenzimidazole (DMBI), and 2-acetonitrilebenzimidazole (ANBI).

3. A tire as claimed in claim 1 or 2, characterized in that said tread rubber composition further comprises 0.1-50 parts by weight of a Bronsted acid.

4. A tire as claimed in claim 3, characterized in that said Bronsted acid includes phenol derivatives, carboxylic acid, sulfonic acid, sulfuric acid and its derivatives, phosphoric acid and its derivatives, cyanuric acid and its derivatives, sulfinic acid, nitric acid and its derivatives, phosphorous acid and its derivatives, dithiophosphoric acid derivatives, and carbonic acid and its derivatives.

**Patentansprüche**

1. Reifen, bei dem die Lauffläche aus einer Kautschukmischung besteht, die enthält: 100 Gew.-T. einer Kautschukkomponente aus natürlichem Kautschuk und/oder synthetischem Kautschuk und 0,1-50 Gew.-T. mindestens einer Imidazolverbindung, ausgewählt unter 2-Methylimidazol (2MZ), 2-Undecylimidazol (C11Z), 2-Heptadecylimidazol (C17Z), 2-Phenylimidazol (2PZ), 2-Äthyl-4-methylimidazol (2E4MZ), 2-Phenyl-4-methylimidazol (2P4MZ), 1-Benzyl-2-methylimidazol (1B2MZ), 1-Cyanoäthyl-2-methylimidazol (2MZ-CN), 1-Cyanoäthyl-2-undecylimidazol (C11Z-CN), 1-Cyanoäthyl-2-phenylimidazol (2PZ-CN), 2,4-Diamino-6-{2'-methylimidazolyl(1')}äthyl-S-triazin (2MZ-AZINE), 2,4-Diamino-6-{2'-undecylimidazolyl-(1')}äthyl-S-triazin (C11Z-AZINE), 2,4-Diamino-6-{2'-äthyl-4'-methylimidazolyl(1')}äthyl-S-triazin (2E4MZ-AZINE), 1-(p-Toluolsulfonyl)imidazol (PTZ), 2,4,5-Tribromimidazol (TBZ), 4-Methylimidazol (4MZ), N-Trimethylsilylimidazol (TSZ), 2-Mercapto-1-methylimidazol (1M2MrZ), p-(Imidazol-1-yl)phenol (4ZP), N-Azetylimidazol (1AZ), Urokansäure (U-Säure), Imidazol-4,5-dicarbonsäure (ZD-Säure), 1-(2,4,6-Trimethylbenzolsulfonyl)imidazol 2-Methyl-5-nitro-1-imidazoläthanol (2M5N1EZ), 2-Phenyl-4,5-dioxymethylimidazol (2PHZ), 2-Phenyl-4-methyl-5-oxymethylimidazol (ZP4MHZ),

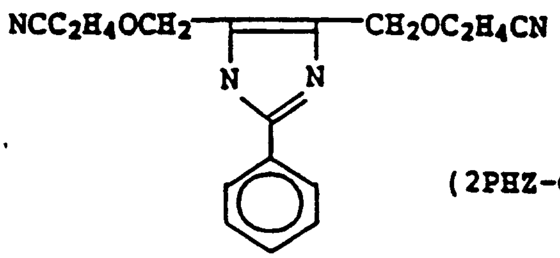

(2PHZ-CN)

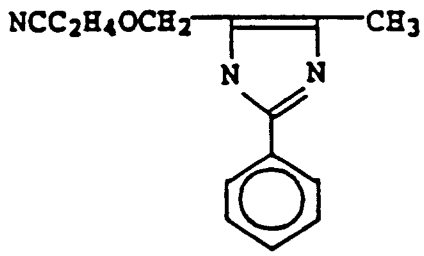

(2P4MZ-CN)

**2.** Reifen, bei dem die Lauffläche aus einer Kautschukmischung besteht, die enthält: 100 Gew.-T. einer Kautschukkomponente aus natürlichem Kautschuk und/oder synthetischem Kautschuk und 0,1-50 Gew.-T. mindestens einer Substanz aus Benzimidazol und Benzimidazolderivaten, ausgewählt unter 2-Anilinobenzimidazol (ABI), 2-Hydroxybenzimidazol (HBI), 2-Methylbenzimidazol (MBI), 2-Phenyl-5-methylbenzimidazol (PMBI), 2-Phenyl-5,6-dimethylbenzimidazol (PDMBI), 2-p-Chlorphenylbenzimidazol (CPBI), Nocodazol (NZ), 2-(2-Pyridin)benzimidazol (PDBI), 2-(4-Fluorphenyl)-1-methylbenzimidazol (FPMBI), 2-Guanidinbenzimidazol (GBI), 2-Chlormethylbenzimidazol (CBI), 5-Chlor-2-(trichlormethyl)-benzimidazol (CTCMBI), 5,6-Dimethylbenzimidazol (DMBI) und 2-Azetonitrilbenzimidazol (ANBI).

**3.** Reifen nach Anspruch 1 oder 2, dadurch gekennzeichnet, daß die Kautschukmischung für die Lauffläche außerdem 0,1-50 Gew.-T. einer Bronsted-Säure enthält.

**4.** Reifen nach Anspruch 3, dadurch gekennzeichnet, daß die Bronsted-Säure Phenolderivate, Carbonsäure, Sulfonsäure, Schwefelsäure und ihre Derivate, Phosphorsäure und ihre Derivate, Cyanursäure und ihre Derivate, Sulfinsäure, Salpetersäure und ihre Derivate, phosphorige Säure und ihre Derivate, Dithiophosphorsäurederivate sowie Kohlensäure und ihre Derivate einschließt.

**Revendications**

**1.** Pneumatique dans lequel la bande de roulement dudit pneumatique est une composition caoutchouteuse comprenant 100 parties en poids d'un composant caoutchouteux constitué de caoutchouc naturel et/ou de caoutchouc synthétique et de 0.1 - 50 parties en poids d'au moins un composé imidazolique choisi parmi le 2-méthylimidazole (2MZ), le 2-undécylimidazole (C11Z), le 2-heptadécylimidazole (C17Z), le 2-phénylimidazole (2PZ), le 2-éthyl-4-méthylimidazole (2E4MZ), le 2-phényl-4-méthylimidazole (2P4MZ), le 1-benzyl-2-méthylimidazole (1B2MZ), le 1-cyanoéthyl-2-méthylimidazole (2MZ-CN), le 1-cyanoéthyl-2-undécylimidazole (C11Z-CN), le 1-cyanoéthyl-2-phénylimidazole (2PZ-CN), la 2,4-diamino-6-{(2'-méthylimidazolyl(1')}éthyl-S-triazine (2MZ-AZINE), la 2,4-diamino-6-{2'-undécylimidazolyl(1')-}éthyl-S-triazine (C11Z-AZINE), la 2,4-diamino-6-{2'-éthyl-4'-méthylimidazolyl-(1')}éthyl-S-triazine (2E4MZ-AZINE), le 1-(p-toluènesulfonyl)imidazole (PTZ), le 2,4,5-tribromo-imidazole (TZB), le 4-méthylimidazole (4MZ), le Mtriméthylsilylimidazole (TSZ), le 2-mercapto-1-méthylimidazole (1M2MrZ), le p-(imidazol-1-yl)phénol (4ZP), le N-acétylimidazole (1AZ), l'acide urocanique (acide U), l'acide imidazole-4,5-dicarboxylique (acide ZD), le 1-(2,4,6-triméthyl-benzènesulfonyl)imidazole, le 2-méthyl-5-nitro-1-imidazole-éthanol (2M5N1EZ), le 2-phényl-4,5-dioxyméthylimidazole (2PHZ), le 2-phényl-4-méthyl-5-oxyméthylimidazole (2P4MHZ),

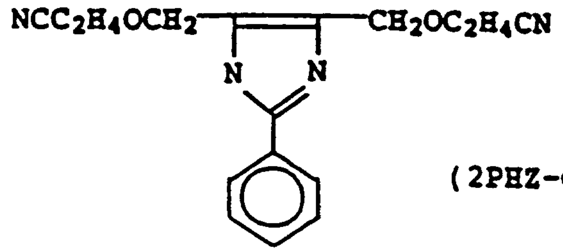

( 2PHZ-CN)

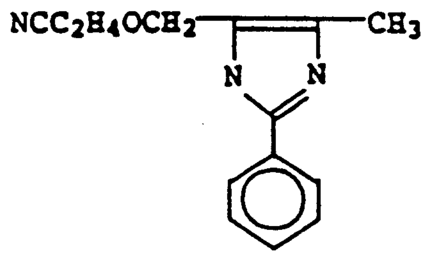

( 2P4MZ-CN)

2. Pneumatique dans lequel la bande de roulement dudit pneumatique est une composition caoutchouteuse comprenant 100 parties en poids d'un composant caoutchouteux constitué de caoutchouc naturel et/ou de caoutchouc synthétique et de 0.1 - 50 parties en poids d'au moins un membre choisi parmi le benzimidazole et les dérivés du benzimidazole choisis parmi le 2-anilinobenzimidazole (ABI), le 2-hydroxybenzimidazole (HBI), le 2-méthylbenzimidazole (MBI), le 2-phényl-5-méthylbenzimidazole (PMBI), le 2-phényl-5,6-diméthylbenzimidazole (PDMBI), le 2-p-chlorophénylbenzimidazole (CPBI), le nocodazole (NZ), le 2-(2-pyridino)benzimidazole (PDBI), le 2-(4-fluorophényl)-1-méthylbenzimidazole (FPMBI), le 2-guanidinobenzimidazole (GBI), le 2-chlorométhylbenzimidazole (CBI), le 5-chloro-2-(trichlorométhyl)benzimidazole (CTCMBI), le 5,6-diméthylbenzimidazole (DMBI) et le 2-acétonitrilebenzimidazole (ANBI).

3. Pneumatique tel que revediqiné dans la revendication 1 ou 2, caractérisé en ce que ladite composition caoutchouteuse comprend en outre 0.1 - 50 parties en poids d'un acide de Bronsted.

4. Pneumatique tel que revendiqué dans la revendication 3, caractérisé en ce que ledit acide de Bronsted comprend des dérivés du phénol, un acide carboxylique, un acide sulfonique, de l'acide sulfurique et ses dérivés, de l'acide phosphorique et ses dérivés, de l'acide cyanurique et ses dérivés, un acide sulfinique, de l'acide nitrique et ses dérivés, de l'acide phosphoreux et ses dérivés, des dérivés de l'acide dithiophosphorique et de l'acide carbonique et ses dérivés.